# FASCICULE DE BREVET EUROPEEN

(11) **EP 2 401 132 B1**
(45) Date de publication et mention de la délivrance du brevet: **10.07.2013**
(21) Numéro de dépôt: 10703895.2
(22) Date de dépôt: 16.02.2010
(51) Int. Cl.: B29C 49/42, B65G 47/90, B65G 17/32

(54) **DISPOSITIF DE PRÉHENSION D'UN CORPS CREUX PAR SON COL**
VORRICHTUNG ZUM ERGREIFEN EINES HOHLKÖRPERS AN SEINEM HALS
DEVICE FOR GRIPPING A HOLLOW BODY BY THE NECK THEREOF

(30) Priorité: 27.02.2009 FR 0951246
(43) Date de publication de la demande: 04.01.2012
(73) Titulaire: Sidel Participations, 76930 Octeville Sur Mer (FR)
(72) Inventeur: CIRETTE, Damien, F-76930 Octeville Sur Mer (FR); DOUDEMENT, Christophe, F-76930 Octeville Sur Mer (FR)
(74) Mandataire: Thibaudeau, David A. C. R.
(86) Numéro de dépôt international: PCT/EP2010/051902
(87) Numéro de publication internationale: WO 2010/097310

(56) Documents cités:
- EP-A- 1 679 177
- US-A- 4 432 720

## Description

L'invention concerne un dispositif pour la préhension d'un corps creux, notamment d'un corps creux muni d'un col tel que décrit dans le préambule de la revendication 1.

L'invention concerne plus particulièrement un dispositif pour la préhension d'un corps creux, le corps creux comportant un corps fermé par le fond et un col tubulaire qui s'étend axialement selon un axe A et qui comporte un buvant annulaire radiale délimitant une ouverture, le dispositif comportant :
- un dosseret délimitant une face d'appui qui s'étend axialement,
- une tête délimitant une face d'appui qui s'étend radialement et orthogonalement à la face d'appui du dosseret,
- un doigt de verrouillage qui est porté par la tête, qui fait saillie axialement par rapport à la face d'appui de la tête, et qui délimite une face de contre-appui.

L'invention se rapporte au domaine de la fabrication de corps creux en matériau thermoplastique, fabrication pour laquelle on réalise d'abord une préforme par injection qui est conditionnée thermiquement dans un four et qui est ensuite formée au moyen d'une machine de soufflage, au cours d'une étape de soufflage ou d'étirage soufflage, pour obtenir le récipient final.

On entend par « corps creux » une préforme de récipient, ou encore un récipient final, ou éventuellement un récipient intermédiaire, c'est-à-dire tout type de corps creux comportant un corps depuis lequel s'étend un col tubulaire débouchant.

Dans la suite du document, il sera utilisé de préférence, de manière non limitative, le terme préforme.

La préforme obtenue par injection présente généralement un corps cylindrique tubulaire qui est fermé à l'une de ses extrémités axiales et qui est prolongé à son autre extrémité par un col, lui aussi tubulaire.

Le col s'étend axialement depuis une collerette principale annulaire qui est agencée à la jonction du col et du corps de la préforme, jusqu'à un buvant annulaire qui délimite une ouverture axiale du col.

Le col est généralement injecté de manière à posséder déjà sa forme définitive tandis que le corps de la préforme est appelé à subir une déformation plastique pour former le récipient final, suite à l'opération de soufflage.

Pour pouvoir procéder à cette opération de soufflage, il est nécessaire que le corps de la préforme soit porté à une température supérieure à la température de transition vitreuse du matériau.

A cet effet, on procède à un conditionnement thermique de la préforme en la faisant circuler à l'intérieur d'un four, au moyen d'un dispositif de transport sans fin, suivant un parcours de chauffage.

Le four comporte des moyens de chauffage qui sont par exemple constitués par des lampes à infrarouge devant lesquelles la préforme est déplacée par le dispositif de transport.

Toutefois, au cours du transport de la préforme à l'intérieur du four, le col de la préforme doit être chauffé le moins possible pour que le col ne soit pas déformé, puisqu'il présente déjà sa forme définitive.

Les préformes sont généralement maintenues sur le dispositif de transport par un dispositif de préhension.

A cet effet, la préforme est transférée, ou chargée, à l'entrée du four par des moyens de transfert, depuis un dispositif d'alimentation en préformes jusqu'au dispositif de préhension du four.

L'opération de transfert d'une préforme depuis les moyens de transfert jusqu'au dispositif de préhension est appelée « vêtissage ».

De la même manière, à la sortie du four, la préforme chauffée est transférée, ou déchargée, par des moyens de transfert supplémentaires depuis le dispositif de préhension, jusqu'à la machine de soufflage des préformes.

On distingue le transfert axial de la préforme depuis les moyens de transfert, jusqu'au dispositif de préhension, et le transfert radial de la préforme depuis les moyens de transfert, jusqu'au dispositif de préhension.

A l'inverse du transfert radial, le transfert axial nécessite un mouvement axial de montée et de descente du dispositif de préhension par rapport au moyen de transfert, ce mouvement étant préjudiciable à la cadence du transfert des préformes.

Le transfert radial est par exemple réalisé par un moyen de transfert radial qui comporte une roue de transfert.

La roue de transfert est montée à rotation autour d'un axe vertical et elle délimite une pluralité de logements ouverts radialement, dans chacun desquels est agencé une préforme, de sorte que chaque préforme est apte à être transférée radialement depuis la roue jusqu'au dispositif de préhension de la préforme.

Toutefois, certains types de dispositifs pour la préhension de la préforme ne sont pas compatibles avec un moyen de transfert radial, notamment un dispositif de préhension du type à doigt mobile, tel que celui décrit dans le document FR-A-2.857.287.

Ce dispositif de préhension comporte un dosseret qui délimite une face d'appui axiale pour l'appui radial d'une face externe du col de la préforme.

De façon complémentaire, le dispositif de préhension comporte un doigt de verrouillage qui délimite une face de contre-appui et une tête qui délimite une face d'appui radiale.

Le doigt de verrouillage est porté par la tête de façon mobile entre une position de déverrouillage dans laquelle le doigt est escamoté et une position de verrouillage dans laquelle le doigt fait saillie depuis la face d'appui de la tête afin de coopérer avec la face interne du col pour verrouiller le col, de sorte que la paroi du col est pincée entre le doigt de verrouillage et le dosseret, et la face d'appui radiale de la tête est en appui axial sur le buvant du col de la préforme.

Le dispositif de préhension à doigt mobile ne donne pas entière satisfaction, puisqu'il n'est en particulier pas apte à coopérer avec un moyen de transfert radial.

En effet, au cours du transfert radial de la préforme vers le dispositif de préhension à doigt mobile, la face d'appui de la tête et le buvant du col de la préforme s'étendent dans un même plan radial, de sorte qu'à la suite du transfert radial, le buvant est en appui axial contre la face d'appui de la tête prévue à cet effet.

Par conséquent, lors d'un tel transfert radial, soit le col de la préforme heurte radialement un bord de la tête, soit le col de la préforme est espacé axialement de la face d'appui de la tête, auquel cas la préforme risque d'être mal maintenue.

Ainsi, pour permettre le transfert radial de la préforme vers le dispositif de préhension à doigt mobile, la position axiale relative de la tête du dispositif et du col de la préforme doit être précise.

Toutefois, une telle précision est difficilement atteignable au regard des cadences très élevées de transfert des préformes vers les dispositifs de préhension. EP 1 679 177 A1 décrit un dispositif correspondant au préambule de la revendication 1.

L'invention vise notamment à permettre le transfert radial de la préforme vers le dispositif de préhension, tout en évitant les problèmes mentionnés précédemment et en assurant un verrouillage, ou accrochage, efficace de la préforme sur le moyen de préhension, même à cadence de transfert élevée.

Dans ce but, l'invention propose un dispositif de préhension du type décrit précédemment, caractérisé en ce que la tête est montée mobile par rapport au dosseret, entre au moins une position de verrouillage du col, dans laquelle la face d'appui radiale de la tête est en appui axial sur au moins une portion du buvant du corps creux, la face d'appui axiale du dosseret est en appui radial sur la face externe du col et la face de contre-appui du doigt de verrouillage est en appui sur une face interne du col, de sorte que lesdites faces d'appui délimitent entre elles une zone dite de préhension du col dans laquelle le col est pincé et verrouillé entre le dosseret et le doigt de verrouillage, et une position de déverrouillage du col, dans laquelle l'ensemble constitué par le doigt de verrouillage et la tête est écarté en dehors de la zone de préhension afin de déverrouiller le col et d'autoriser le retrait et/ou l'introduction radial du col du corps creux dans la zone de préhension.

Selon d'autres caractéristiques de l'invention :
- la tête est montée pivotante par rapport au dosseret autour d'un axe B radial orthogonal au dosseret ;
- la face de contre-appui du doigt est d'une forme convexe qui est en appui contre la face interne du col du corps creux, en vis à vis du dosseret, lorsque la tête occupe sa position de verrouillage ;
- le doigt de verrouillage et la tête sont liés entre eux en déplacement, de sorte que la face de contre-appui du doigt de verrouillage vient automatiquement en appui sur la face interne du col, lorsque la tête est entraînée depuis sa position de déverrouillage, jusqu'à sa position de verrouillage ;
- la tête, dans sa position de verrouillage, est agencée de façon à obturer l'ouverture du col du corps creux, afin de prévenir l'intrusion de particules polluantes à l'intérieur du corps creux ;
- le dosseret comporte un bord de blocage qui s'étend radialement et qui est destiné à venir en appui axial contre une collerette radiale annulaire du col, lorsque la tête occupe sa position de verrouillage, de sorte que le col est bloqué axialement entre ledit bord de blocage du dosseret et la face d'appui de la tête ;
- le dosseret délimite une nervure qui fait saillie radialement depuis la face d'appui du dosseret, la nervure étant apte à coopérer avec une gorge complémentaire du col du corps creux lorsque la tête occupe sa position de verrouillage, de sorte que la gorge du col est bloquée axialement par la nervure du dosseret ;
- la nervure du dosseret présente une forme chanfreinée de section sensiblement décroissante selon une direction radiale vers la zone de préhension, pour favoriser l'introduction radiale de la nervure dans la gorge associée du col ;
- la tête comporte des moyens de refroidissement par dissipation de chaleur ;
- le dispositif comporte des moyens d'actionnement pour commander sélectivement en déplacement la tête entre sa position de verrouillage et sa position de déverrouillage.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue en coupe axiale selon l'axe A, illustrant un dispositif de préhension qui comporte une tête en position de verrouillage du col d'une préforme selon l'invention ;
- la figure 2 est une vue en coupe axiale selon l'axe A, illustrant le dispositif de préhension de la figure 1 dont la tête occupe une position de déverrouillage du col de la préforme ;
- la figure 3 est une vue en perspective, illustrant le dispositif de préhension de la figure 1 dont la tête occupe sa position de verrouillage du col de la préforme.

Dans la description et les revendications, on adoptera par convention et à titre non limitatif les termes "axial", "supérieur" et "inférieur", selon la direction verticale et sans référence à la gravité terrestre, et les directions longitudinale, verticale et transversale en référence aux trièdres (L, V, T) indiqués sur les figures.

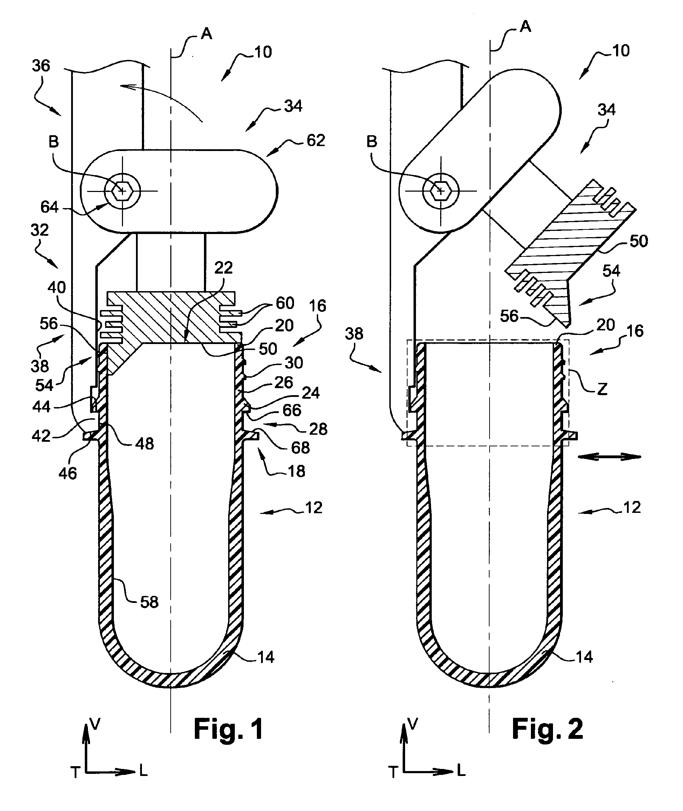

On adoptera aussi les termes "arrière" et "avant" en référence à la partie gauche et à la partie droite respectivement des figures 1 et 2.

Cependant, ces notions ne doivent pas être interprétées comme étant des limitations à la portée de l'invention, d'autant plus que l'on connaît des dispositifs de transport qui, après la préhension de la préforme orientée col en haut, permettent un retournement de manière que la préforme circule col en bas devant les moyens de chauffage, avant d'être retournée de nouveau pour son déchargement.

On a représenté à la figure 1 un dispositif 10 de préhension d'une préforme 12, qui est destiné à être embarqué sur un dispositif de transport (non représenté) de la préforme 12.

Le dispositif de transport est destiné à assurer la circulation de la préforme 12 à l'intérieur d'un four de conditionnement thermique en vue de permettre ultérieurement le moulage par soufflage ou par étirage-soufflage de la préforme 12 pour obtenir un récipient, par exemple une bouteille.

L'invention trouvera notamment application dans les installations de soufflage de récipients en polyéthylène téréphtalate (PET) dans lesquelles des préformes préalablement moulées par injection sont acheminées dans le four de conditionnement thermique puis vers un dispositif de soufflage.

Le dispositif de transport des préformes est par exemple pourvu d'une chaîne comportant une série de maillons qui sont articulés entre eux et qui sont reliés chacun à un dispositif 10 de préhension.

La chaîne tourne à l'intérieur du four en circuit fermé et il est prévu, en entrée de four, des moyens de transfert, ou de chargement, de la préforme 12 vers le dispositif 10 de préhension et, en sortie de four, des moyens de transfert supplémentaires, ou de déchargement, de la préforme 12 depuis le dispositif 10 de préhension.

Le dispositif de transport est donc apte à faire circuler la préforme 12 à l'intérieur du four selon un parcours de chauffage déterminé, le long duquel la préforme 12 défile devant des moyens de chauffage tels que des lampes à infrarouge.

Pour assurer une bonne homogénéité du chauffage de la préforme 12, il est connu d'entraîner en rotation sur elle même la préforme 12 autour de son axe A, tout au long du parcours de chauffage devant les moyens de chauffage.

A cet effet, le dispositif 10 de préhension de la préforme 12 est lié en rotation à des moyens d'entraînement en rotation (non représentés) autour de l'axe A vertical.

La préforme 12 comporte un corps 14 cylindrique tubulaire qui est fermé à son extrémité axiale inférieure par une portion hémisphérique et qui est prolongé à son extrémité axiale supérieure par un col 16, lui aussi tubulaire.

Le col 16 s'étend axialement selon l'axe A, depuis une collerette 18 principale annulaire, jusqu'à un buvant 20 annulaire radiale, ou lèvre, qui délimite une ouverture 22 axiale du col 16, l'ouverture 22 permettant d'accéder au volume intérieur de la préforme 12.

La collerette 18 principale, qui est située à la jonction du col 16 et du corps 14 de la préforme 12, s'étend autour de l'axe A et fait saillie radialement depuis une face externe 26 du col 16.

De même, le col 16 comporte ici une collerette 24 secondaire qui s'étend autour de l'axe A et qui fait saillie radialement depuis une face externe 26 du col 16.

La collerette 24 secondaire est agencée au dessus de la collerette 18 principale, de sorte que les deux collerettes délimitent entre elles une gorge 28 annulaire qui est destinée à recevoir une bague d'inviolabilité d'un bouchon (non représenté) de fermeture.

De façon complémentaire, la face externe 26 du col 16 comporte un filet 30 pour la mise en place ultérieure du bouchon.

Comme on peut le voir à la figure 1, le dispositif 10 de préhension est composé pour l'essentiel d'une embase 32 et d'une tête 34.

L'embase 32 s'étend axialement, de bas en haut, depuis une portion d'entraînement 36, jusqu'à un dosseret 38.

La portion d'entraînement 36 comporte des moyens d'accouplement (non représentés) qui sont destinés à coopérer avec une portion complémentaire du dispositif de transport, de sorte que le dispositif de préhension est entraîné en rotation autour de l'axe A et entraîné en déplacement dans le four suivant le parcours de chauffage.

Les moyens d'accouplement sont par exemple réalisés par vissage, par coopération de formes, ou tout autre moyen d'accouplement connu.

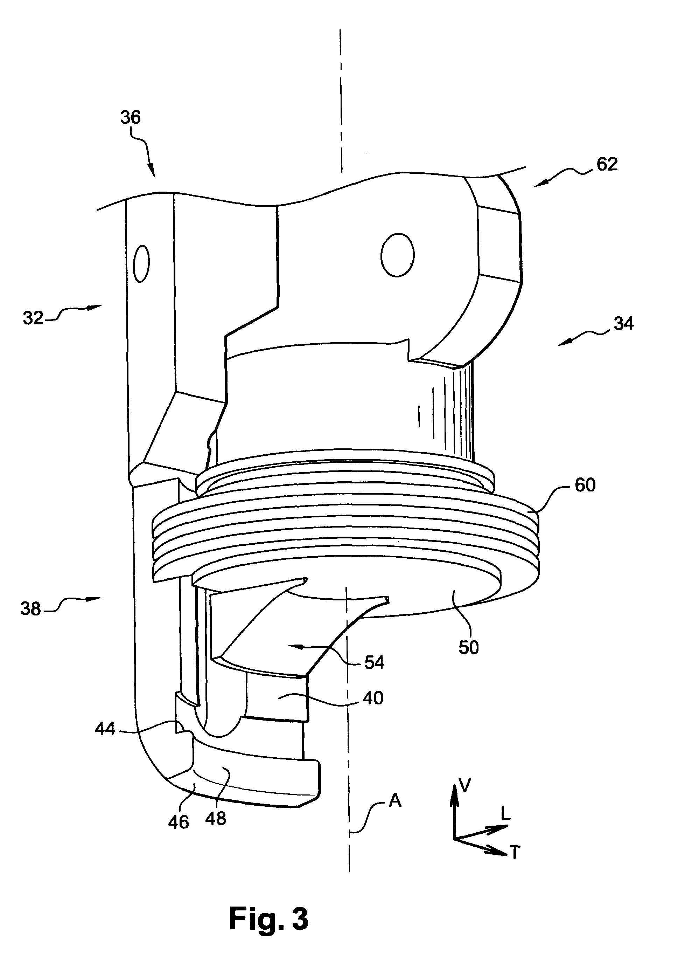

Comme on peut le voir à la figure 3, le dosseret 38 est de la forme d'une portion de cylindre qui s'étend autour de l'axe A vertical, et qui est délimitée vers l'avant par une face d'appui 40 axiale, pour permettre l'appui radial de la face externe 26 du col 16 de la préforme 12.

De plus, le dosseret 38 comporte une nervure 42 concave qui s'étend autour de l'axe A et qui fait saillie radialement vers l'avant depuis la face d'appui 40 du dosseret 38.

La nervure 42 présente une forme complémentaire à la forme de la gorge 28 du col 16 de la préforme 12, de sorte que la nervure 42 est apte à être reçue radialement dans la gorge 28 pour bloquer axialement le col 16 de la préforme 12 par rapport à l'embase 32.

Plus particulièrement, la nervure 42 est d'une forme chanfreinée de section sensiblement décroissante radialement vers l'avant, la nervure 42 étant délimitée axialement par un bord 44 supérieur de blocage et un bord 46 inférieur de blocage, et radialement par un bord 48 avant.

Selon la figure 1, la tête 34 du dispositif 10 de préhension comporte une partie inférieure globalement cylindrique selon l'axe A, qui est délimitée axialement vers le bas par une face d'appui 50 radiale.

La face d'appui 50 radiale de la tête 34 s'étend orthogonalement à la face d'appui 40 axiale du dosseret 38, de sorte que le buvant 20 du col 16 de la préforme 12 est apte à être en appui axial vers le haut contre la face d'appui 50 de la tête 34.

De plus, la tête 34 comporte un doigt 54 de verrouillage qui fait saillie axialement vers le bas depuis la face d'appui 50 de la tête 34.

Le doigt 54 de verrouillage comporte une face de contre-appui 56 qui s'étend axialement et qui est apte à être en appui radial vers l'arrière contre une face interne 58 du col 16 de la préforme 12, en vis à vis de la face d'appui 40 avant du dosseret 38.

A cet effet, la face de contre-appui 56 présente une forme convexe d'une portion de cylindre complémentaire à la forme de la face interne 58 du col 16.

Selon un autre aspect, la tête 34 est équipée de moyens de refroidissement, pour dissiper la chaleur absorbée par la tête 34.

Les moyens de refroidissement comportent une pluralité d'ailettes 60 qui sont superposées axialement les unes par rapport aux autres et qui s'étendent chacune radialement, à la manière des ailettes d'un radiateur, à l'extérieur de la préforme 12.

Selon un autre aspect, la tête 34 du dispositif 10 de préhension est montée pivotante par rapport à l'embase 32, autour d'un axe B radial transversal, depuis une position de verrouillage, représentée à la figure 1, jusqu'à une position de déverrouillage, représentée à la figure 2.

A cet effet, la tête 34 comporte une partie supérieure 62 d'articulation qui est liée mécaniquement sur l'embase 32 au moyen d'un arbre 64 de pivotement autour de l'axe B transversal de pivotement, l'axe B étant agencé au dessus du dosseret 38.

De façon complémentaire, le dispositif 10 de préhension comporte des moyens d'actionnement (non représentés) pour commander sélectivement le déplacement de la tête 34 entre sa position de verrouillage et sa position de déverrouillage.

Les moyens d'actionnement de la tête 34 sont par exemple des moyens mécaniques qui comportent une tige axiale de commande dont une extrémité axiale inférieure est montée à rotation sur la portion supérieure 62 de la tête 34, autour d'un axe transversal, et dont une extrémité axiale supérieure est liée mécaniquement à un moyen d'entraînement axial vertical.

Le moyen d'entraînement axial comporte par exemple un galet qui coopère avec un chemin de came, de sorte que au cours du déplacement dans le four du dispositif de transport équipé du dispositif de préhension, le galet commande en déplacement axial vertical la tige de commande, grâce à quoi la tête 34 est commandée en déplacement, par pivotement autour de l'axe B.

A titre non limitatif, les moyens d'actionnement peuvent être constitués par tout autre moyen d'actionnement permettant d'entraîner en pivotement la tête 34, les moyens d'actionnement pouvant par exemple être un actionneur pneumatique, un actionneur hydraulique ou encore un actionneur électrique.

Dans sa position de verrouillage, illustrée à la figure 1, la face d'appui 50 de la tête 34 est en appui axial vertical sur le buvant 20 du col 16 de la préforme 12, la face d'appui 40 du dosseret 38 est en appui radial longitudinal sur la face externe 26 du col 16 et la face de contre-appui 56 du doigt 54 de verrouillage est en appui radial longitudinal sur la face interne 58 du col 16, vers l'arrière, de sorte que le col 16 est pincé et verrouillé entre le dosseret 38 et le doigt 54 de verrouillage.

Lorsque la tête 34 occupe sa position de verrouillage, une portion du col 16 est interposée radialement entre le doigt 54 et la face d'appui 40 du dosseret 38, cette portion de col 16 comportant ici le filet 30 du col 16.

De même, la nervure 42 du dosseret 38 est reçue dans la gorge 28 complémentaire du col 16, sans jeu axial, de sorte que le bord 44 supérieur de la nervure 42 est en appui axial sur une face inférieure 66 de la collerette 24 secondaire, et/ou le bord 46 inférieur de la nervure 42 est en appui axial sur une face supérieure 68 de la collerette 18 principale.

De plus, la forme chanfreinée de la nervure 42 favorise l'insertion radiale de la nervure 42 dans la gorge 28 associée et la mise en position du col 16 par rapport au dosseret 38.

Enfin, lorsque la tête 34 occupe sa position de verrouillage, l'ensemble constitué par le doigt 54 de verrouillage et la tête 34 est situé dans une zone Z dite de préhension.

La zone Z de préhension, qui est représentée schématiquement à la figure 2 par une ligne en pointillés, correspond à la zone dans laquelle est situé le col 16 de la préforme 12 lorsque le col 16 est verrouillé par la tête 34, cette zone Z étant notamment délimitée par la face d'appui 40 du dosseret 38 et la face d'appui 50 de la tête 34.

Le déplacement de la tête 34 vers sa position de verrouillage est commandé de manière synchronisée avec l'introduction radiale du col 16 de la préforme 12 dans la zone Z de préhension, dans le but de réduire le temps nécessaire au verrouillage de la préforme 12.

Dans sa position de verrouillage, illustrée à la figure 2, l'ensemble constitué par le doigt 54 de verrouillage et la tête 34 est écarté en dehors de la zone Z de préhension, afin de déverrouiller le col 16 et de ne pas gêner le retrait ou l'introduction radiale, longitudinalement, du col 16 de la préforme 12 dans la zone Z de préhension.

Selon une variante de réalisation, le dosseret 38 ne comporte pas de nervure 42, la face d'appui 40 du dosseret étant d'une forme concave cylindrique, de surface lisse ou striée.

Selon cette variante, le dosseret comporte à son extrémité axiale inférieure une face d'appui qui est en appui axial contre la collerette 18 principale, lorsque le col 16 est situé dans la zone Z de préhension.

Cette variante est notamment adaptée à un col 16 qui ne comporte pas de collerette 24 secondaire, et qui par conséquent ne comporte pas de gorge 28.

Selon une autre variante de réalisation, dans le but de prévenir l'intrusion de particules polluantes à l'intérieur de la préforme 12, la tête 34, dans sa position de verrouillage, est agencée de façon à boucher l'ouverture 22 de la préforme 12.

De plus, l'obturation de l'ouverture 22 permet de favoriser la stérilisation de l'intérieur de la préforme 12 par des moyens de stérilisation par peroxyde d'hydrogène (H2O2), tels que ceux décrits dans le document WO-A-99/03727.

En effet, ce type de moyens de stérilisation permet d'injecter du peroxyde d'hydrogène à l'intérieur de la préforme 12, le peroxyde d'hydrogène est activé thermiquement par la chaleur des moyens de chauffage du four, avant d'être éliminé par évaporation.

Ainsi, la tête 34 du dispositif 10 de préhension permet d'emprisonner le peroxyde d'hydrogène à l'intérieur de la préforme 12 pendant la phase de chauffage de la préforme 12 dans le four.

Selon une autre variante de réalisation, la tête 34 est montée mobile en translation par rapport au dosseret 38 selon une direction oblique du haut vers le bas et de l'avant vers l'arrière.

A titre non limitatif, le dispositif 10 selon l'invention peut être agencé ailleurs que sur un dispositif de transport des préformes dans le four.

Le dispositif 10 peut être agencé dans tout endroit de l'installation de soufflage de récipients, le dispositif 10 peut notamment équiper un dispositif de transfert des préformes qui est agencé entre le four et un dispositif d'alimentation en préformes, ou entre le four et une machine de soufflage.

De même, le dispositif 10 peut équiper un dispositif de transport des bouteilles formées, en amont de la machine de soufflage.

## Revendications

1. Dispositif (10) pour la préhension d'un corps creux (12), le corps creux (12) comportant un corps (14) fermé par le fond et un col (16) tubulaire qui s'étend axialement selon un axe (A) et qui comporte un buvant (20) annulaire radial délimitant une ouverture (22), le dispositif (10) comportant :
- un dosseret (38) délimitant une face d'appui (40) qui s'étend axialement,
- une tête (34) délimitant une face d'appui (50) qui s'étend radialement et orthogonalement à la face d'appui (40) du dosseret (38),
- un doigt (54) de verrouillage qui est porté par la tête (34), qui fait saillie axialement par rapport à la face d'appui (50) de la tête (34), et qui délimite une face de contre-appui (56),
**caractérisé en ce que** la tête (34) est montée mobile par rapport au dosseret (38), entre au moins une position de verrouillage du col (16), dans laquelle la face d'appui (50) radiale de la tête (34) est en appui axial sur au moins une portion du buvant (20) du corps creux (12), la face d'appui (40) axiale du dosseret (38) est en appui radial sur la face externe (26) du col (16) et la face de contre-appui (56) du doigt (54) de verrouillage est en appui sur une face interne (58) du col (16), de sorte que lesdites faces d'appui (40, 50) délimitent entre elles une zone (Z) dite de préhension du col (16) dans laquelle le col (16) est pincé et verrouillé entre le dosseret (38) et le doigt (54) de verrouillage, et
une position de déverrouillage du col (16), dans laquelle l'ensemble constitué par le doigt (54) de verrouillage et la tête (34) est écarté en dehors de la zone (Z) de préhension afin de déverrouiller le col (16) et d'autoriser le retrait et/ou l'introduction radial du col (16) du corps creux (12) dans la zone (Z) de préhension.

2. Dispositif (10) de préhension selon la revendication 1, **caractérisé en ce que** la tête (34) est montée pivotante par rapport au dosseret (38) autour d'un axe (B) radial orthogonal au dosseret (38).

3. Dispositif (10) de préhension selon l'une quelconque des revendications précédentes, **caractérisé en ce que** la face de contre-appui (56) du doigt (54) est d'une forme convexe qui est en appui contre la face interne (58) du col (16) du corps creux (12), en vis à vis du dosseret (38), lorsque la tête (34) occupe sa position de verrouillage.

4. Dispositif (10) de préhension selon l'une quelconque des revendications précédentes, **caractérisé en ce que** le doigt (54) de verrouillage et la tête (34) sont liés entre eux en déplacement, de sorte que la face de contre-appui (56) du doigt (54) de verrouillage vient automatiquement en appui sur la face interne (58) du col (16), lorsque la tête (34) est entraînée depuis sa position de déverrouillage, jusqu'à sa position de verrouillage.

5. Dispositif (10) de préhension selon l'une quelconque des revendications précédentes, **caractérisé en ce que** la tête (34), dans sa position de verrouillage, est agencée de façon à obturer l'ouverture (22) du col (16) du corps creux (12), afin de prévenir l'intrusion de particules polluantes à l'intérieur du corps creux (12).

6. Dispositif (10) de préhension selon l'une quelconque des revendications précédentes, **caractérisé en ce que** le dosseret (38) comporte un bord (44) de blocage qui s'étend radialement et qui est destiné à venir en appui axial contre une collerette (24) radiale annulaire du col (16), lorsque la tête (34) occupe sa position de verrouillage, de sorte que le col (16) est bloqué axialement entre ledit bord (44) de blocage du dosseret (38) et la face d'appui (50) de la tête (34).

7. Dispositif (10) de préhension selon l'une quelconque des revendications précédentes, **caractérisé en ce que** le dosseret (38) délimite une nervure (42) qui fait saillie radialement depuis la face d'appui (40) du dosseret (38), la nervure (42) étant apte à coopérer avec une gorge (28) complémentaire du col (16) du corps creux (12) lorsque la tête (34) occupe sa position de verrouillage, de sorte que la gorge (28) du col (16) est bloquée axialement par la nervure (42) du dosseret (38).

8. Dispositif (10) de préhension selon la revendication 7, **caractérisé en ce que** la nervure (42) du dosseret (38) présente une forme chanfreinée de section sensiblement décroissante selon une direction radiale vers la zone (Z) de préhension, pour favoriser l'introduction radiale de la nervure (42) dans la gorge (28) associée du col (16).

9. Dispositif (10) de préhension selon l'une quelconque des revendications précédentes, **caractérisé en ce que** la tête (34) comporte des moyens de refroidissement (60) par dissipation de chaleur.

10. Dispositif (10) de préhension selon l'une quelconque des revendications précédentes, **caractérisé en ce qu'**il comporte des moyens d'actionnement pour commander sélectivement en déplacement la tête (34) entre sa position de verrouillage et sa position de déverrouillage.

11. Dispositif (10) de préhension selon la revendication 1, **caractérisé en ce que** la tête (34) est montée mobile en translation par rapport au dosseret (38) selon une direction oblique du haut vers le bas et de l'avant vers l'arrière.

## Patentansprüche

1. Vorrichtung (10) zum Ergreifen eines Hohlkörpers (12), wobei der Hohlkörper (12) einen am Boden verschlossenen Körper (14) und einen rohrförmigen Hals (16) aufweist, der sich axial gemäß einer Achse (A) erstreckt und ein radialen ringförmigen Mündungsrand (20) aufweist, der eine Öffnung (22) begrenzt, wobei die Vorrichtung (10) aufweist:
- einen Rücken (38), der eine Auflageseite (40) begrenzt, die sich axial erstreckt,
- einen Kopf (34), der eine Auflageseite (50) begrenzt, die sich radial und orthogonal zur Auflageseite (40) des Rückens (38) erstreckt,
- einen vom Kopf (34) getragenen Verriegelungsfinger (54), der axial bezüglich der Auflageseite (50) des Kopfes (34) vorsteht und eine Gegenauflageseite (56) begrenzt,
**dadurch gekennzeichnet, dass** der Kopf (34) bezüglich des Rückens (38) zwischen mindestens eine Verriegelungsstellung des Halses (16), in der die radiale Auflageseite (50) des Kopfes (34) axial auf mindestens einem Teil des Mündungsrands (20) des Hohlkörpers (12) aufliegt, die axiale Auflageseite (40) des Rückens (38) radial auf der Außenseite (26) des Halses (16) aufliegt, und die Gegenauflageseite (56) des Verriegelungsfingers (54) auf einer Innenseite (58) des Halses (16) aufliegt, so dass die Auflageseiten (40, 50) zwischen sich eine so genannte Greifzone (Z) des Halses (16) begrenzen, in der der Hals (16) zwischen dem Rücken (38) und dem Verriegelungsfinger (54) eingeklemmt und verriegelt ist, und
einer Entriegelungsstellung des Halses (16) beweglich montiert ist, in der die aus dem Verriegelungsfinger (54) und dem Kopf (34) bestehende Einheit von der Greifzone (Z) entfernt ist, um den Hals (16) zu entriegeln und die radiale Entnahme und/oder Einführung des Halses (16) des Hohlkörpers (12) in der Greifzone (Z) zu erlauben.

2. Greifvorrichtung (10) nach Anspruch 1, **dadurch gekennzeichnet, dass** der Kopf (34) bezüglich des Rückens (38) um eine radiale Achse (B) orthogonal zum Rücken (38) schwenkbar montiert ist.

3. Greifvorrichtung (10) nach einem der vorhergehenden Ansprüche, **dadurch gekennzeichnet, dass** die Gegenauflageseite (56) des Fingers (54) von konvexer Form ist, die gegen die Innenseite (58) des Halses (16) des Hohlkörpers (12) gegenüber dem Rücken (38) aufliegt, wenn der Kopf (34) seine Verriegelungsstellung einnimmt.

4. Greifvorrichtung (10) nach einem der vorhergehenden Ansprüche, **dadurch gekennzeichnet, dass** der Verriegelungsfinger (54) und der Kopf (34) in Bewegung miteinander verbunden sind, so dass die Gegenauflageseite (56) des Verriegelungsfingers (54) automatisch auf die Innenseite (58) des Halses (16) in Auflage kommt, wenn der Kopf (34) von seiner Entriegelungsstellung bis in seine Verriegelungsstellung angetrieben wird.

5. Greifvorrichtung (10) nach einem der vorhergehenden Ansprüche, **dadurch gekennzeichnet, dass** der Kopf (34) in seiner Verriegelungsstellung so angeordnet ist, dass er die Öffnung (22) des Halses (16) des Hohlkörpers (12) verschließt, um das Eindringen von Schmutzpartikeln ins Innere des Hohlkörpers (12) zu verhindern.

6. Greifvorrichtung (10) nach einem der vorhergehenden Ansprüche, **dadurch gekennzeichnet, dass** der Rücken (38) einen Blockierrand (44) aufweist, der sich radial erstreckt und dazu bestimmt ist, gegen einen ringförmigen radialen Kragen (24) des Halses (16) in axiale Auflage zu kommen, wenn der Kopf (34) seine Verriegelungsstellung einnimmt, so dass der Hals (16) axial zwischen dem Blockierrand (44) des Rückens (38) und der Auflageseite (50) des Kopfes (34) blockiert ist.

7. Greifvorrichtung (10) nach einem der vorhergehenden Ansprüche, **dadurch gekennzeichnet, dass** der Rücken (38) eine Rippe (42) begrenzt, die radial von der Auflageseite (40) des Rückens (38) vorsteht, wobei die Rippe (42) mit einer komplementären Rille (28) des Halses (16) des Hohlkörpers (12) zusammenwirken kann, wenn der Kopf (34) seine Verriegelungsstellung einnimmt, so dass die Rille (28) des Halses (16) axial von der Rippe (42) des Rückens (38) blockiert wird.

8. Greifvorrichtung (10) nach Anspruch 7, **dadurch gekennzeichnet, dass** die Rippe (42) des Rückens (38) eine abgeschrägte Form mit einem in einer radialen Richtung zur Greifzone (Z) im Wesentlichen abnehmendem Querschnitt hat, um die radiale Einführung der Rippe (42) in die zugeordnete Rille (28) des Kragens (16) zu begünstigen.

9. Greifvorrichtung (10) nach einem der vorhergehenden Ansprüche, **dadurch gekennzeichnet, dass** der Kopf (34) Einrichtungen (60) zum Kühlen durch Wärmeableitung aufweist.

10. Greifvorrichtung (10) nach einem der vorhergehenden Ansprüche, **dadurch gekennzeichnet, dass** sie Betätigungseinrichtungen aufweist, um die Verschiebung des Kopfes (34) zwischen seiner Verriegelungsstellung und seiner Entriegelungsstellung selektiv zu steuern.

11. Greifvorrichtung (10) nach Anspruch 1, **dadurch gekennzeichnet, dass** der Kopf (34) bezüglich des Rückens (38) in einer schrägen Richtung von oben nach unten und von vorne nach hinten translationsbeweglich montiert ist.

## Claims

1. A device (10) for gripping a hollow body (12), the hollow body (12) having a body (14) which is closed at the bottom and a tubular neck (16) which extends axially along an axis (A) and which has a radial annular lip (20) defining an opening (22), the device (10) having:
- a backpiece (38) defining a support surface (40) which extends axially,
- a head (34) defining a support surface (50) which extends radially and at right angles to the support surface (40) of the backpiece (38),
- a locking finger (54) which is carried on the head (34), protrudes axially with respect to the support surface (50) of the head and delimits a counter-support surface (56),
**characterized in that** the head (34) is mounted such that it can move with respect to the backpiece (38) between at least a position in which the neck (16) is locked, in which the radial support surface (50) of the head (34) is axially supported on at least a portion of the lip (20) of the hollow body (12), the axial support surface (40) of the backpiece (38) is radially supported on the outer surface (26) of the neck (16) and the counter-support surface (56) of the locking finger (54) is supported on an inner surface (58) of the neck (16), such that said support surfaces (40, 50) delimit between one another what is known as a gripping region (Z) for gripping said neck (16), in which the neck (16) is clamped and locked between the backpiece (38) and the locking finger (54), and
a position in which the neck (16) is unlocked, in which the assembly formed by the locking finger (54) and the head (34) is moved apart from the gripping region (Z) in order to unlock the neck (16) and to make it possible to remove and introduce the neck (16) of the hollow body (12) from and/or into the gripping region (Z).

2. The gripping device (10) as claimed in claim 1, **characterized in that** the head (34) is mounted such that it can pivot with respect to the backpiece (38) about a radial axis (B) at right angles to the backpiece (38).

3. The gripping device (10) as claimed in either of the preceding claims, **characterized in that** the counter-support surface (56) of the finger (54) has a convex form which is supported against the inner surface (58) of the neck (16) of the hollow body (12), opposite the backpiece (38), when the head (34) is in its locked position.

4. The gripping device (10) as claimed in any one of the preceding claims, **characterized in that** the locking finger (54) and the head (34) are connected together for the purposes of movement, such that the counter-support surface (56) of the locking finger (54) is automatically supported on the inner surface (58) of the neck (16) when the head (34) is driven from its unlocked position into its locked position.

5. The gripping device (10) as claimed in any one of the preceding claims, **characterized in that**, in its locked position, the head (34) is arranged such that it closes off the opening (22) in the neck (16) of the hollow body (12) so as to prevent contaminating particles entering the inside of the hollow body (12).

6. The gripping device (10) as claimed in any one of the preceding claims, **characterized in that** the backpiece (38) has a blocking edge (44) which extends radially and is intended to be axially supported against an annular radial flange (24) of the neck (16) when the head (34) is in its locked position, such that the neck (16) is blocked axially between said blocking edge (44) of the backpiece (38) and the support surface (50) of the head (34).

7. The gripping device (10) as claimed in any one of the preceding claims, **characterized in that** the backpiece (38) delimits a rib (42) which protrudes radially from the support surface (40) of the backpiece (38), the rib (42) being able to engage with a complementary groove (28) in the neck (16) of the hollow body (12) when the head (34) is in its locked position, such that the groove (28) in the neck (16) is axially blocked by the rib (42) on the backpiece (38).

8. The gripping device (10) as claimed in claim 7, **characterized in that** the rib (42) on the backpiece (38) has a beveled form having a section that more or less decreases in a radial direction toward the gripping region (Z) in order to enable the rib (42) to be introduced radially into the associated groove (28) in the neck (16).

9. The gripping device (10) as claimed in any one of the preceding claims, **characterized in that** the head (34) has means (60) for cooling by dissipation of heat.

10. The gripping device (10) as claimed in any one of the preceding claims, **characterized in that** it has actuating means for selectively moving the head (34) between its locked position and its unlocked position.

11. The gripping device (10) as claimed in claim 1, **characterized in that** the head (34) is mounted such as it can move translationally with respect to the backpiece 38 according to an oblique direction from the top downward and from the front to the rear.
